# EUROPEAN PATENT APPLICATION

(11) **EP 1 630 001 A1**
(43) Date of publication of application: **01.03.2006**
(21) Application number: 05107529.9
(22) Date of filing: 16.08.2005
(51) Int. Cl.: B60C 1/00, C08L 7/00, C08L 9/06, C08L 9/00, C08K 5/54, C08K 3/36

(54) **Pneumatic tire having a rubber component containing polyethylene terpolymer**

(30) Priority: 19.08.2004 US 921528
(71) Applicant: THE GOODYEAR TIRE & RUBBER COMPANY, Akron, Ohio 44316-0001 (US)
(72) Inventor: Sandstrom, Paul Harry, 44223, Cuyahoga Falls (US)
(74) Representative: Kutsch, Bernd

(57) **Abstract**

A pneumatic tire having a component comprising at least one rubber selected from polybutadiene rubber, styrene-butadiene rubber, synthetic polyisoprene rubber, and natural rubber; and from 1 to 30 parts by weight, per 100 parts by weight of rubber, of a terpolymer of: ethylene, an α-olefin, and a nonconjugated diene; the terpolymer having an ethylene content of greater than 80 percent by weight and a Mooney viscosity (ML 1 + 4 at 125°C) of from 5 to 25 as measured by ASTM D-1646.

## Description

### Background of the Invention

US-A- 5,216,066 discloses a tire tread rubber compound containing a sulfonamide modified EPDM terpolymer.

US-A- 5,341,863 discloses a pneumatic tire having a sulfur cured tread comprised of at least one diene rubber and a low density polyethylene having a crystalline melting point of 104°C to 115°C.

US-A- 5,964,969 discloses a pneumatic tire having a rubber sidewall with a portion composed of white rubber devoid of carbon black and composed of an elastomer composition of EPDM, chlorobutyl rubber, diene-based elastomers and liquid EPDM.

US-A- 6,255,372 discloses a tire having improved tear strength including at least one component comprising an elastomer, from 5 to 50 phr of polypropylene, and from 0.05 to 2 phr of an anhydride compatibilizer.

US-A- 6,274,676 discloses a tire having improved tear strength including at least one component comprising an elastomer, and up to 35 phr of polyolefin copolymer.

US-A- 6,602,954 discloses a tire having improved tear strength including at least one component comprising an elastomer and up to 35 phr of a functionalized polyolefin.

### Summary of the Invention

The present invention relates to a pneumatic tire according to claim 1. Dependent claims cover preferred embodiments of the invention.

### Detailed Description of the Invention

There is disclosed a pneumatic tire having a component comprising at least one rubber selected from polybutadiene rubber, styrene-butadiene rubber, synthetic polyisoprene rubber, and natural rubber; and from 1 to 30 parts by weight, per 100 parts by weight of rubber, of a terpolymer of: ethylene, an α-olefin, and a non-conjugated diene. The terpolymer has an ethylene content of greater than 80 percent by weight and a Mooney viscosity (ML 1 + 4 at 125°C) of from 5 to 25 as measured by ASTM D-1646.

The terpolymer of ethylene, an α-olefin, and a non-conjugated diene includes terpolymers composed of ethylene and propylene units and an unsaturated component (EPDM), ethylene and butene units and an unsaturated component, ethylene and pentene units and an unsaturated component, ethylene and octene units and an unsaturated, non-conjugated diene component, as well as mixtures thereof. Thus suitable α-olefins include propylene, butene, pentene, and octene, and mixtures thereof. As the unsaturated component of the terpolymer, any appropriate non-conjugated diene may be used, including, for example, 1,4-hexadiene, dicyclopentadiene or ethylidenenorbornene (ENB), or mixtures thereof. The terpolymer of ethylene, an α-olefin, and a non-conjugated diene preferred in the present invention contains greater than 80 percent by weight of ethylene, from 1 percent by weight to 10 percent by weight of the α-olefin unit and 1 to 10 percent by weight of the non-conjugated diene component. In a more preferred embodiment, the terpolymer of ethylene, an α-olefin, and a non-conjugated diene contains greater than 85 percent by weight of ethylene. The terpolymer of ethylene, an α-olefin, and a non-conjugated diene is also characterized by a Mooney viscosity (ML 1 + 4 at 125°C) is of from 5 to 25 as measured by ASTM D-1646. Alternatively, the Mooney viscosity (ML 1 + 4 at 125°C) of from 10 to 20 as measured by ASTM D-1646. The terpolymer of ethylene, an α-olefin, and a non-conjugated diene may be further characterized as being highly crystalline, with a crystalline content greater than 25 percent by weight as measured by differential scanning calorimetry (DSC) at a rate of 10°C/minute. The most preferred terpolymer of ethylene, an α-olefin, and a non-conjugated diene is a terpolymer of ethylene, propylene, and ethylidenenorbornene.

The terpolymer of ethylene, an α-olefin, and a non-conjugated diene can be produced using conventional ethylene/α-olefin polymerization technology as disclosed for example in US-A- 6,455,638. Preferably, the terpolymer components of this invention are made using a mono- or bis-cyclopentadienyl, indenyl, or fluorenyl transition metal (preferably Group 4) catalysts or constrained geometry catalysts (CGC) in combination with an activator, in a solution, slurry, or gas phase polymerization process. The catalyst is preferably mono-cyclopentadienyl, mono-indenyl or mono-fluorenyl CGCs. The solution process is preferred. US-A- 5,064,802; WO93/19104 and WO95/00526 disclose constrained geometry metal complexes and methods for their preparation. Variously substituted indenyl containing metal complexes are taught in WO95/14024 and WO98/49212.

In general, terpolymer polymerization may be accomplished at conditions well known in the art for Ziegler-Natta or Kaminsky-Sinn type polymerization reactions, that is, temperatures from 0 to 250°C, preferably 30 to 200°C., and pressures from atmospheric to 10,000 atmospheres (1013 megapascals (MPa)). Suspension, solution, slurry, gas phase, solid state powder polymerization or other process conditions may be employed if desired. A support, especially silica, alumina, or a polymer (especially poly(tetrafluoroethylene) or a polyolefin) may be employed, and desirably is employed when the catalyst is used in a gas phase polymerization process. The support is preferably employed in an amount sufficient to provide a weight ratio of catalyst (based on metal):support within a range of from 1:100,000 to 1:10, more preferably from 1:50,000 to 1:20, and most preferably from 1:10,000 to 1:30. In most polymerization reactions, the molar ratio of catalyst:polymerizable compounds employed is from 10⁻¹²:1 to 10⁻¹:1, more preferably from 10⁻⁹:1 to 10⁻⁵:1.

Inert liquids serve as suitable solvents for polymerization of the terpolymer. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; perfluorinated hydrocarbons such as perfluorinated C₄-C₁₀ alkanes; and aromatic and alkylsubstituted aromatic compounds such as benzene, toluene, xylene, and ethylbenzene. Suitable solvents also include liquid olefins that may act as monomers or comonomers including butadiene, cyclopentene, 1-hexene, 1-hexane, 4-vinylcyclohexene, vinylcyclohexane, 3-methyl-1-pentene, 4-methyl-1-pentene, 1,4-hexadiene, 1-octene, 1-decene, styrene, divinylbenzene, allylbenzene, and vinyltoluene (including all isomers alone or in admixture). Mixtures of the foregoing are also suitable. If desired, normally gaseous olefins can be converted to liquids by application of pressure and used herein.

Suitable terpolymer of ethylene, an α-olefin, and a non-conjugated diene are available commercially. For example, suitable terpolymer is available from Dupont-Dow Elastomers as Nordel® IP NDR 4820 and Nordel® IP NDR 4920.

In one embodiment, the rubber composition comprises from 1 to 30 parts by weight, per 100 parts by weight of rubber (phr), of the terpolymer of ethylene, an α-olefin, and a non-conjugated diene. In another embodiment, the rubber composition comprises from 5 to 15 phr of the terpolymer.

In addition to the terpolymer of ethylene, an α-olefin, and a non-conjugated diene, the rubber component contains a rubber containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate. Additional examples of rubbers which may be used include a carboxylated rubber, silicon-coupled and tin-coupled star-branched polymers. The preferred rubber or elastomers are polybutadiene, SBR, and synthetic and natural polyisoprene.

In one aspect, the rubber to be combined with the ethylene/α-olefin elastomer may be a blend of at least two diene based rubbers. For example, a blend of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene butadiene rubbers, cis 1,4-polybutadiene rubbers and emulsion polymerization prepared butadiene/acrylonitrile copolymers.

In one aspect of this invention, an emulsion polymerization derived styrene butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

When used in the tire tread, the relatively high styrene content of 30 to 45 for the E-SBR can be considered beneficial for a purpose of enhancing traction, or skid resistance. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition. The 3,4-PI and use thereof is more fully described in US-A-5,087,668.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

In addition to the terpolymer of ethylene, an α-olefin, and a non-conjugated diene and second rubber in the rubberized component of the tire, conventional fillers may be also present. The amount of such conventional fillers may range from 10 to 250 phr. Preferably, the filler is present in an amount ranging from 20 to 100 phr.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Commonly employed carbon blacks can be used as a conventional filler. Representative examples of such carbon blacks include N110, N115, N121, N134, N220, N231, N234, N242, N293, N299, S315, N326, N330, M332, N339, N343, N347, N351, N358, N375, N539, N550, N582, N630, N642, N650, N660, N683, N754, N762, N765, N774, N787, N907, N908, N990 and N991. These carbon blacks have iodine absorptions ranging from 9 to 170 g/kg and DBP No. ranging from 34 to 150 cm³/100 g.

It may be preferred to have the rubber composition for use in the tire component to additionally contain a conventional sulfur containing organosilicon compound. Examples of suitable sulfur containing organosilicon compounds are of the formula:

Z - Alk - S_{n -} Alk - Z

in which Z is selected from the group consisting of 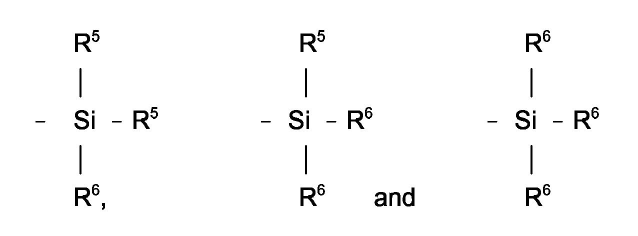
where R⁵ is an alkyl group of 1 to 4 carbon atoms, cyclohexyl or phenyl; R⁶ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

Specific examples of sulfur containing organosilicon compounds which may be used in accordance with the present invention include: 3,3'-bis(trimethoxysilylpropyl) disulfide, 3'3-bis(triethoxysilylpropyl) disulfide, 3-phenyl ethoxybutoxysilyl 3'-trimethoxysilylpropyl tetrasulfide, 4,4'-bis(trimethoxysilylbutyl) tetrasulfide, 5,5'-bis(dimethoxymethylsilylpentyl) trisulfide.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore as to the above formula, preferably Z is 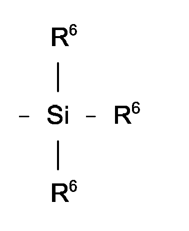
where R⁶ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur containing organosilicon compound of the above formula in a rubber composition will vary depending on the level of other additives that are used. Generally speaking, the amount of the compound of the above formula will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. Representative examples of sulfur donors include elemental sulfur (free sulfur), an amine disulfide, polymeric polysulfide and sulfur olefin adducts. Preferably, the sulfur vulcanizing agent is elemental sulfur. The sulfur vulcanizing agent may be used in an amount ranging from 0.5 to 8 phr. Typical amounts of tackifier resins, if used, comprise 0.5 to 10 phr. Typical amounts of processing aids comprise 1 to 50 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. Suitable types of accelerators that may be used in the present invention are amines, disulfides, guanidines, thioureas, thiazoles, thiurams, sulfenamides, dithiocarbamates and xanthates. Preferably, the accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber and compound is mixed in one or more non-productive mix stages. If the rubber composition contains a sulfur-containing organosilicon compound, one may subject the rubber composition to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat, innerliner, and ply coat. Preferably, the compound is a sidewall insert or a tread.

In one embodiment, the rubber composition is incorporated in the ground contacting tread of a tire. The rubber composition shows abrasion resistance and tear resistance that is particularly advantageous when the composition is used in a tread.

Vulcanization of the pneumatic tire of the present invention is generally carried out at conventional temperatures ranging from 100°C to 200°C. Any of the usual vulcanization processes may be used such as heating in a press or mold, heating with superheated steam or hot air.

### EXAMPLE 1

In this Example, a terpolymer of ethylene, an α-olefin, and a non-conjugated diene was evaluated in a synthetic polyisoprene composition containing carbon black.

Rubber composition containing the materials set out in Table 1 were prepared using two separate stages of addition (mixing); namely one non-productive mix stage and one productive mix stage. The non-productive stage was mixed for four minutes to a rubber temperature of 160°C. The productive stage was mixed for two minutes, and the drop temperature for the productive mix stage was 115°C.

The rubber compositions are identified as Sample 1 through Sample 3. Samples 1 and 2 are considered as controls due to the absence of terpolymer of ethylene, an α-olefin, and a non-conjugated diene.

The Samples were cured at about 150° for about 36 minutes.

Table 2 illustrates the physical properties of the cured Samples 1 through 3.

**Table 1**

| Sample No. | 1 | 2 | 3 |
|---|---|---|---|
| First Non-Productive Mix Stage | | | |
| Synthetic cis 1,4-polyisoprene rubber¹ | 100 | 100 | 100 |
| Carbon black² | 50 | 50 | 50 |
| Processing oil³ | 5 | 0 | 0 |
| Polyolefin⁴ | 0 | 5 | 0 |
| Terpolymer⁵ | 0 | 0 | 5 |
| Zinc oxide | 3 | 3 | 3 |
| Fatty acid⁶ | 2 | 2 | 2 |
| Antidegradants⁷ | 2 | 2 | 2 |

| Productive Mix Stage | | | |
|---|---|---|---|
| Insoluble sulfur | 1.4 | 1.4 | 1.4 |
| Accelerator, sulfenamide⁸ | 1 | 1 | 1 |

| | | | |
|---|---|---|---|
| ¹ NAT2200 from the Goodyear Tire & Rubber Company | | | |
| ² ASTM N299 | | | |
| ³ Flexon 641 from ExxonMobil | | | |
| ⁴ Engage 8445, 90 percent ethylene, 10 percent octene, M.P. 103°C, Mooney 8 | | | |
| ⁵ Nordel IP NDR 4920, 90 percent ethylene, 5 percent propylene, 5 percent ENB, melting point 91°C, Mooney ML (1+4) at 125°C = 10. | | | |
| ⁶ Blend comprised of stearic, palmitic and oleic acids | | | |
| ⁷ Quinoline type | | | |
| ⁸ Tertiary butyl sulfenamide | | | |

**Table 2**

| Sample No. | 1 | 2 | 3 |
|---|---|---|---|
| Processing oil | 5 | 0 | 0 |
| Polyolefin | 0 | 5 | 0 |
| Terpolymer | 0 | 0 | 5 |

| Rheometer, 150°C | | | |
|---|---|---|---|
| Maximum torque, dNm | 18.5 | 19.3 | 19.6 |
| Minimum torque, dNm | 2.6 | 2.9 | 3.0 |
| Delta torque, dNm | 15.9 | 16.4 | 16.6 |
| T₉₀, minutes | 9.7 | 10.9 | 11.3 |

| Stress-strain (ASTMD412) at 23°C | | | |
|---|---|---|---|
| Tensile strength, MPa | 24.3 | 24.9 | 24.7 |
| Elongation at break (%) | 487 | 487 | 480 |
| 300% Modulus, MPa | 12.6 | 13.5 | 13.6 |

| Rebound (Zwick) | | | |
|---|---|---|---|
| 23°C | 50 | 50 | 50 |
| 100°C | 66 | 65 | 65 |

| Shore A Hardness | | | |
|---|---|---|---|
| 23°C | 65 | 69 | 70 |
| 100°C | 59 | 62 | 62 |

| Tear Strength, 95°C | | | |
|---|---|---|---|
| N | 107 | 77 | 76 |

| DIN Abrasion | | | |
|---|---|---|---|
| Relative cc volume loss | 118 | 121 | 113 |

| RPA at 100°C | | | |
|---|---|---|---|
| G'(10% strain) kPa | 1097 | 1267 | 1291 |
| Tan delta (10% strain) | 0.134 | 0.138 | 0.138 |

It can be seen from Table 2 that a substantial improvement in abrasion is observed for Sample 3 comprising the terpolymer of ethylene, an α-olefin, and a non-conjugated diene, as compared with Samples 1 and 2.

### EXAMPLE 2

In this Example, a terpolymer of ethylene, an α-olefin, and a non-conjugated diene was evaluated in an emulsion polymerized styrene butadiene composition containing carbon black.

Rubber composition containing the materials set out in Table 2 were prepared using two separate stages of addition (mixing); namely one non-productive mix stage and one productive mix stage. The non-productive stage was mixed for four minutes to a rubber temperature of 160°C. The productive stage was mixed for two minutes, and the drop temperature for the productive mix stage was 115°C.

The rubber compositions are identified as Sample 4 through Sample 6. Samples 4 and 6 are considered as controls due to the absence of terpolymer of ethylene, an α-olefin, and a non-conjugated diene.

The Samples were cured at 150°C for 36 minutes.

Table 4 illustrates the physical properties of the cured Samples 4 through 6.

**Table 3**

| Sample No. | 4 | 5 | 6 |
|---|---|---|---|
| First Non-Productive Mix Stage | | | |
| Synthetic cis 1,4-polyisoprene rubber¹ | 100 | 100 | 100 |
| Carbon black² | 50 | 50 | 50 |
| Processing oil³ | 5 | 0 | 0 |
| Polyolefin⁴ | 0 | 5 | 0 |
| Terpolymer⁵ | 0 | 0 | 5 |
| Zinc oxide | 3 | 3 | 3 |
| Fatty acid⁶ | 2 | 2 | 2 |
| Antidegradants⁷ | 2 | 2 | 2 |

| Productive Mix Stage | | | |
|---|---|---|---|
| Insoluble sulfur | 1 | 1 | 1 |
| Accelerator, sulfenamide⁸ | 1 | 1 | 1 |
| Accelerator, guanidine⁹ | 1 | 1 | 1 |

| | | | |
|---|---|---|---|
| ¹PLF1502 from the Goodyear Tire & Rubber Company | | | |
| ²ASTM N299 | | | |
| ³Flexon 641 from ExxonMobil | | | |
| ⁴Engage 8445, 90 percent ethylene, 10 percent octene, M.P. 103°C, Mooney 8 | | | |
| ⁵Nordel IP NDR 4820, 85 percent ethylene, 10 percent propylene, 5 percent ENB, melting point 80°C, Mooney ML (1+4) at 125°C = 15, crystallinity 28 weight percent, crystallization temperature = 79°C. | | | |
| ⁶Blend comprised of stearic, palmitic and oleic acids | | | |
| ⁷Quinoline type | | | |
| ⁸Tertiary butyl sulfenamide | | | |
| ⁹Diphenyl guanidine, | | | |

**Table 4**

| Sample No. | 4 | 5 | 6 |
|---|---|---|---|
| Processing Oil | 5 | 0 | 0 |
| Polyolefin | 0 | 5 | 0 |
| Terpolymer | 0 | 0 | 5 |

| Rheometer, 150°C | | | |
|---|---|---|---|
| Maximum torque, dNm | 15.7 | 16.1 | 16.8 |
| Minimum torque, dNm | 2.4 | 2.7 | 2.8 |
| Delta torque, dNm | 13.3 | 13.4 | 14.0 |
| T₉₀, minutes | 16.9 | 15.6 | 17.4 |

| Stress-strain (ASTM D412) at 23°C | | | |
|---|---|---|---|
| Tensile strength, MPa | 23.6 | 25.8 | 25.1 |
| Elongation at break (%) | 513 | 504 | 507 |
| 300% Modulus, MPa | 11.3 | 13.3 | 12.7 |

| Rebound (Zwick) | | | |
|---|---|---|---|
| 23°C | 45 | 44 | 44 |
| 100°C | 55 | 55 | 54 |

| Shore A Hardness | | | |
|---|---|---|---|
| 23°C | 68 | 72 | 72 |
| 100°C | 57 | 60 | 60 |

| Tear Strength, 95°C | | | |
|---|---|---|---|
| N | 128 | 114 | 147 |

| DIN Abrasion | | | |
|---|---|---|---|
| Relative cc volume loss | 87 | 80 | 77 |

| RPA at 100°C, 1 Hz | | | |
|---|---|---|---|
| G' (10% strain), KPa | 1102 | 1150 | 1187 |
| Tan delta (10% strain) | 0.162 | 0.171 | 0.161 |

As seen in Table 3, Sample 6 containing the terpolymer of ethylene, an α-olefin, and a non-conjugated diene showed significantly improved tear strength and abrasion resistance as compared with Samples 4 and 5.

### EXAMPLE 3

In this Example, a terpolymer of ethylene, an α-olefin, and a non-conjugated diene was evaluated in an synthetic cis 1,4-polyisoprene composition containing carbon black and silica.

Rubber composition containing the materials set out in Table 5 were prepared using two separate stages of addition (mixing); namely one non-productive mix stage and one productive mix stage. The non-productive stage was mixed for four minutes to a rubber temperature of 160°C. The productive stage was mixed for two minutes, and the drop temperature for the productive mix stage was 115°C.

The rubber compositions are identified as Sample 7 and Sample 8. Sample 7 is considered as a control due to the absence of a terpolymer of ethylene, an α-olefin, and a non-conjugated diene.

The Samples were cured at 150°C for 36 minutes.

Table 6 illustrates the physical properties of the cured Samples 7 and 8.

**Table 5**

| Sample No. | 7 | 8 |
|---|---|---|
| First Non-productive MixStage | | |
| Synthetic cis 1,4-polyisoprene rubber¹ | 100 | 100 |
| Carbon black² | 20 | 20 |
| Silica⁴ | 15 | 15 |
| Processing oil³ | 5 | 0 |
| Terpolymer⁵ | 0 | 0 |
| Zinc oxide | 3 | 3 |
| Fatty acid⁶ | 2 | 2 |
| Antidegradant⁷ | 2 | 2 |
| Silane coupling agent¹⁰ | 3 | 3 |

| Non-Productive Mixing Step 2 | | |
|---|---|---|
| Silica | 15 | 15 |
| Silane Coupling Agent | 2 | 2 |

| Productive Mix Stage | | |
|---|---|---|
| Insoluble sulfur | 1.4 | 1.4 |
| Accelerator, sulfenamide⁸ | 1.8 | 1.8 |
| Accelerator, guanidine⁹ | 0.5 | 0.5 |

| | | |
|---|---|---|
| ¹NAT2200 from the Goodyear Tire & Rubber Company | | |
| ²ASTM N299 | | |
| ³Flexon 641 from ExxonMobil | | |
| ⁴Synthetic, amorphous precipitated silica as HiSil® 243 from PPG | | |
| ⁵NordellP NDR 4920, 90 percent ethylene, 5 percent propylene, 5 percent ENB, melting point 91°C, Mooney ML (1+4) at 125°C = 10 | | |
| ⁶Blend comprised of stearic, palmitic and oleic acids | | |
| ⁷Quinoline type | | |
| ⁸Tertiary butyl sulfenamide | | |
| ⁹Diphenyl guanidine | | |
| ¹⁰X50S from DeGussa, 50 percent active, bis(3-triethoxysilyspropyl) tetrasulfide | | |

**Table 6**

| Sample No. | 7 | 8 |
|---|---|---|
| Processing Oil | 5 | 0 |
| Terpolymer | 0 | 5 |

| Rheometer, 150°C | | |
|---|---|---|
| Maximum torque, dNm | 20.2 | 21.6 |
| Minimum torque,dNm | 2.2 | 2.3 |
| Delta torque,dNm | 18 | 19.3 |
| T₉₀, minutes | 13.2 | 14.3 |

| Stress-strain (ASTM D412) at 23°C | | |
|---|---|---|
| Tensile strength, MPa | 21.2 | 23.9 |
| Elongation at break (%) | 470 | 489 |
| 300% Modulus, MPa | 12.3 | 13.4 |

| Rebound (Zwick) | | |
|---|---|---|
| 23°C | 53 | 53 |
| 100°C | 68 | 67 |

| Shore A Hardness | | |
|---|---|---|
| 23°C | 66 | 71 |
| 100°C | 65 | 68 |

| Tear Strength, 95°C | | |
|---|---|---|
| N | 52 | 35 |

| DIN Abrasion | | |
|---|---|---|
| Relative cc volume loss | 126 | 117 |

| RPA at 100°C, 1 Hz | | |
|---|---|---|
| G' (10% strain), kPa | 1397 | 1556 |
| Tan delta (10% strain) | 0.120 | 0.125 |

It can be seen from Table 6 that a substantial improvement in abrasion is observed for Sample 8 comprising the terpolymer of ethylene, an α-olefin, and a non-conjugated diene, as compared with Sample 7.

## Claims

1. A pneumatic tire having a component, the component comprising:
at least one rubber selected from polybutadiene rubber, styrene-butadiene rubber, synthetic polyisoprene rubber, and natural rubber; and
from 1 to 30 parts by weight, per 100 parts by weight of rubber, of a terpolymer of ethylene, an α-olefin, and a non-conjugated diene, wherein the terpolymer has an ethylene content of greater than 80 percent by weight and a Mooney viscosity (ML 1 + 4 at 125°C) of from 5 to 25 as measured by ASTM D-1646.

2. The pneumatic tire of claim 1, wherein the component comprises from 5 to 15 parts by weight, per 100 parts by weight of rubber, of the terpolymer of ethylene, an α-olefin, and a non-conjugated diene.

3. The pneumatic tire of claim 1 or 2, wherein the α-olefin is selected from the group consisting of propylene, butene, pentene, and octene.

4. The pneumatic tire of claim 1, wherein the non-conjugated diene is selected from the group consisting of 1,4-hexadiene, dicyclopentadiene and ethylidenenorbornene.

5. The pneumatic tire of claim 1, wherein the α-olefin is propylene and the non-conjugated diene is ethylidenenorbornene.

6. The pneumatic tire of claim 1, wherein the terpolymer has an ethylene content of greater than 85 percent by weight.

7. The pneumatic tire of claim 1, wherein said the terpolymer has a Mooney viscosity (ML 1 + 4 at 125°C) of from 10 to 20 as measured by ASTM D-1646.

8. The pneumatic tire of at least one of the previous claims, wherein the component further comprises 10 to 250 phr of a filler selected from carbon black and silica.

9. The pneumatic tire of at least one of the previous claims, wherein the component further comprises from 0.5 to 20 phr of a sulfur containing organosilicon compound of the formula:
Z - Alk - Sₙ - Alk - Z
in which Z is selected from the group consisting of 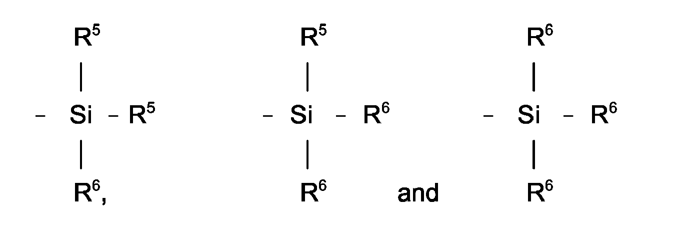
where R⁵ is an alkyl group of 1 to 4 carbon atoms, cyclohexyl or phenyl; R⁶ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

10. A pneumatic tire according to at least one of the previous claims having at least one rubber selected from polybutadiene rubber, styrene-butadiene rubber, synthetic polyisoprene rubber, and natural rubber;
from 1 to 30 parts by weight, per 100 parts by weight of rubber, of a terpolymer of ethylene, an α-olefin, and a non-conjugated diene; the terpolymer having an ethylene content of greater than 80 percent by weight and a Mooney viscosity (ML 1 + 4 at 125°C) of from 5 to 25 as measured by ASTM D-1646 and a crystalline content greater than 25 percent by weight as measured by differential scanning calorimetry (DSC) at a rate of 10°C/minute;
from 10 to 250 phr of a filler selected from carbon black and silica; and
from 0.5 to 20 phr of a sulfur containing organosilicon compound of the formula:
Z - Alk - Sₙ - Alk - Z
in which Z is selected from the group consisting of 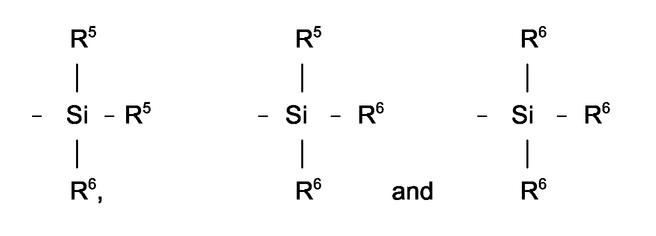
where R⁵ is an alkyl group of 1 to 4 carbon atoms, cyclohexyl or phenyl; R⁶ is alkoxy of 1 to 8 carbon atoms, or cycloalkoxy of 5 to 8 carbon atoms; Alk is a divalent hydrocarbon of 1 to 18 carbon atoms and n is an integer of 2 to 8.
